# FASCICULE DE BREVET EUROPEEN

(11) **EP 3 350 458 B1**
(45) Date de publication et mention de la délivrance du brevet: **11.08.2021**
(21) Numéro de dépôt: 16775298.9
(22) Date de dépôt: 09.09.2016
(51) Int. Cl.: F16B 5/08, B23K 11/11, B62D 27/02, F16B 11/00

(54) **ASSEMBLAGE D'ELEMENTS EN TÔLE METALLIQUE COMPRENANT UNE FEUILLURE**
ANORDNUNG AUS BLECHELEMENTEN MIT EINER FALZ
ASSEMBLY OF SHEET-METAL ELEMENTS COMPRISING A RABBET

(30) Priorité: 18.09.2015 FR 1558841
(43) Date de publication de la demande: 25.07.2018
(73) Titulaire: PSA Automobiles SA, 78300 Poissy (FR)
(72) Inventeur: FERRAND, Stéphane, 78760 Jouars Pontchartrain (FR); LACOUR, Mathieu, 78140 Velizy Villacoublay (FR)
(74) Mandataire: Fernandez, Francis Lionel
(86) Numéro de dépôt international: PCT/FR2016/052282
(87) Numéro de publication internationale: WO 2017/046493

(56) Documents cités:
- WO-A1-2013/126478
- WO-A1-2013/126478
- FR-A1- 2 976 544
- FR-A1- 2 976 544
- GB-A- 2 182 996
- GB-A- 2 182 996
- JP-A- 2000 094 141
- JP-A- 2000 094 141
- JP-A- 2006 213 262
- JP-A- 2006 213 262

## Description

L'invention a trait au domaine des assemblages de tôles métalliques, notamment d'emboutis de véhicule automobile. Plus particulièrement, l'invention a trait à un assemblage de tôles métalliques formant une feuillure et à un procédé de réalisation d'un tel assemblage.

Une structure de caisse de véhicule automobile est formée d'assemblages d'emboutis qui comprennent des bords superposés formant des feuillures de jonction des emboutis. La rigidité d'une structure de caisse dépend en partie de la rigidité des emboutis utilisés, elle dépend également en partie de la rigidité des feuillures de jonction. Un manque de rigidité des feuillures de jonction peut en réduisant la rigidité de la caisse par exemple impacter le confort de roulage ou la qualité de tenue de route.

Le document de brevet US 2007/0245541 A1 divulgue un assemblage d'au moins deux éléments en tôle métallique comprenant, chacun, un bord. Les bords des éléments sont superposés pour former une feuillure de jonction des éléments. Les bords des éléments sont assemblés par des points de soudage par résistance électrique qui sont répartis le long de la feuillure ainsi que par une bande de colle dans la feuillure. Un des bords de l'assemblage comprend, en outre, une zone circulaire à l'intérieur de laquelle est réalisé le point de soudage électrique et qui comprend des portions mises à forme en saillie en regard du bord de l'élément opposé. Les portions en saillie permettent de contrôler la quantité de colle restant dans la feuillure après soudage. La solution de cet enseignement est onéreux en ce qu'il requiert une mise à forme d'un des bords de l'assemblage ce qui impacte le coût de l'assemblage. L'enseignement est par ailleurs généralement relatif au nettoyage de colle sur l'assemblage.

Le document FR 3 976 544 A divulge un autre agencement de deux pièces, assemblées l'une à l'autre par deux de leurs parois superposées.

L'invention a pour objectif de proposer une solution palliant au moins un inconvénient de l'état de la technique, en particulier de l'état de la technique susmentionné. Plus particulièrement, l'invention a pour objectif de proposer une solution pour faciliter la réalisation d'un assemblage efficace d'éléments en tôle mécanique et qui soit économique.

L'invention a pour objet un assemblage d'au moins deux éléments en tôle métallique comprenant, chacun, un bord plan, lesdits bords étant superposés pour former une feuillure plane de jonction desdits éléments, ladite feuillure comprenant une extrémité libre, et lesdits bords étant assemblés par des points de soudage répartis le long de la feuillure suivant un premier axe ; et au moins une bande de colle dans la feuillure s'étendant le long de ladite feuillure suivant un deuxième axe ; remarquable en ce que le deuxième axe est décalé par rapport au premier axe, dans une direction opposée à l'extrémité libre de la feuillure. Par axe de la bande de colle, on entend un axe s'étendant dans le milieu de la bande de colle.

On entend par plan une surface qui ne comporte pas de relief localement, tel qu'une partie saillie ou un creux, c'est-à-dire qui est plate.

Selon un mode avantageux de l'invention, le deuxième axe est décalé de plus de 2mm, préférentiellement de plus de 4mm.

Selon un mode avantageux de l'invention, la bande de colle est continue ou discontinue.

Selon un mode avantageux de l'invention, la bande de colle est discontinue et les points de soudage sont réalisés au niveau des tronçons pourvus de colle et/ou au niveau des tronçons dépourvus de colle.

Selon l'invention, le premier axe est situé dans l'axe médian de la feuillure ou à distance dudit axe de moins de 30% de la largeur de la feuillure, préférentiellement de moins de 15% de ladite largeur, plus préférentiellement encore de moins de 5% de ladite largeur.

Selon un mode avantageux de l'invention, la feuillure comprend une première moitié partant de l'extrémité libre, la bande de colle comprenant une portion s'étendant sur la deuxième moitié de ladite feuillure, ladite portion étant de largeur supérieure à 50% de la largeur de ladite bande, préférentiellement supérieure à 65% de ladite largeur, plus préférentiellement encore supérieure à 80% de ladite largeur.

Selon l'invention, le deuxième axe est décalé du premier axe d'une distance comprise entre 20% et 80% de la largeur de la bande de colle, préférentiellement comprise entre 50% et 70% de ladite largeur.

Selon un mode avantageux de l'invention, la colle est à base d'époxy ou à base de polyuréthane élastomère.

Selon un mode avantageux de l'invention, un ou plusieurs des éléments forment au moins une zone qui est adjacente au bord et qui comprend un pli ou au moins une portion courbée.

Selon un mode avantageux de l'invention, les éléments sont en fer ou en aluminium.

Selon un mode avantageux de l'invention, la tôle est d'une épaisseur comprise entre 0.5mm et 4mm, préférentiellement entre 1.2mm et 2.5mm.

Selon un mode avantageux de l'invention, la bande de colle est d'une largeur comprise entre 20% et 80% de la largeur de la feuillure.

Selon un mode avantageux de l'invention, les points de soudage sont des points de soudage par résistance électrique et ont un diamètre compris entre 5% et 30% de la largeur de la feuillure, préférentiellement compris entre 10% et 20% de ladite largeur.

Selon un mode avantageuse de l'invention, les points de soudage sont obtenus par soudage laser.

Selon un mode avantageux de l'invention, les points de soudage sont répartis le long de la feuillure selon une densité comprise entre 5 et 20 points de soudage par mètre linéaire, préférentiellement comprise entre 10 et 15.

L'invention a également pour objet un procédé de réalisation d'un assemblage conforme à l'invention, remarquable par les étapes suivantes : - dépose d'un cordon de colle suivant le deuxième axe sur le bord d'un des éléments ; - assemblage d'un autre des éléments sur l'élément ; - réalisation des points de soudage suivant le premier axe.

Selon un mode avantageux de l'invention, la bande de colle est un élément collant se présentant lors de la dépose sur le bord de l'élément sous la forme d'une bande ou sous la forme d'un cordon de colle, préférentiellement de section rectangulaire.

Selon un mode avantageux de l'invention, les éléments de l'assemblage sont maintenus en position entre l'étape de l'assemblage et l'étape de la réalisation des points de soudage.

Les mesures de l'invention sont intéressantes en ce que l'assemblage des éléments métalliques est efficace. En effet, la bande de colle est située selon un axe qui est décalé à l'opposé de l'extrémité libre de la feuillure par rapport à l'axe selon lequel sont réalisés les points de soudure ce qui équilibre la distribution des efforts dans la feuillure.

D'autres caractéristiques et avantages de la présente invention seront mieux compris à l'aide de la description et des dessins parmi lesquels :
- La figure 1 est une vue d'un assemblage de deux éléments en tôle métallique conforme à l'invention ;
- La figure 2 est une vue de dessus d'un assemblage de deux éléments en tôle métallique conforme à l'invention et dans un premier mode de réalisation ;
- La figure 3 est une vue de dessus d'un assemblage de deux éléments en tôle métallique conforme à l'invention et dans un deuxième mode de réalisation ;
- La figure 4 est une illustration d'un procédé de réalisation de l'assemblage de la figure 1 conforme à l'invention et à une première étape du procédé ;
- La figure 5 est une illustration du procédé de réalisation de l'assemblage de la figure 1 conforme à l'invention et à une deuxième étape du procédé ;
- La figure 6 est une illustration du procédé de réalisation de l'assemblage de la figure 1 conforme à l'invention et à une troisième étape du procédé ;

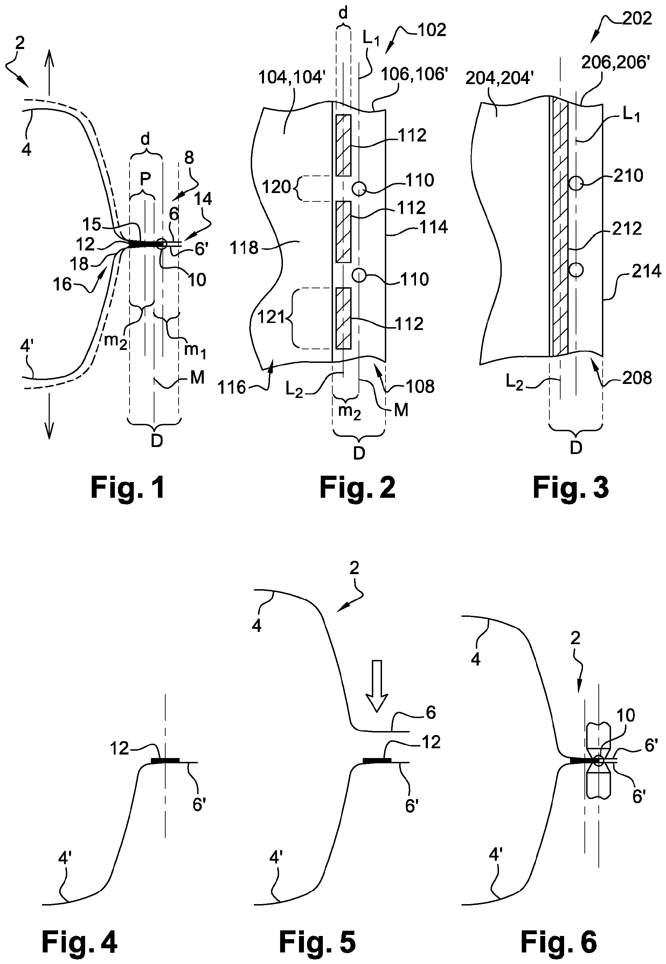

La figure 1 est une vue d'un assemblage 2 de deux éléments en tôle métallique 4 et 4' conforme à l'invention. Les éléments comprennent chacun un bord 6 et 6' et les bords des éléments sont superposés pour former une feuillure de jonction 8 des éléments 4 et 4'. Les bords sont assemblés par des points de soudage 10 par résistance électrique qui sont répartis le long de la feuillure suivant un premier axe ainsi que par une bande de colle 12 dans la feuillure s'étendant le long de la feuillure suivant un deuxième axe. La feuillure comprend une extrémité libre 14 (à droite sur l'image) et le deuxième axe est décalé par rapport au premier axe dans une direction opposée à l'extrémité libre 14 de la feuillure 8. Le premier axe des points de soudage est situé à une distance d'un axe médian de la feuillure de moins de 30% de la largeur « D » de la feuillure, préférentiellement de moins de 15%, plus préférentiellement encore de moins de 5% de ladite largeur. Dans un mode alternatif de réalisation, le premier axe des points de soudage peut être correspondant avec l'axe médian de la feuillure. Cette mesure est intéressante pour équilibrer les efforts de jonction dans la largeur de la feuillure. On peut observer une première moitié «m1 » de la feuillure partant de l'extrémité libre 14. La bande de colle peut être désaxée par rapport à l'axe médian de la feuillure. En particulier, la bande de colle peut comprendre une portion 15 qui s'étend sur la deuxième moitié « m2 » de la feuillure et qui est de largeur « P » supérieure à 50% de la largeur « d » de la bande de colle, préférentiellement supérieure à 65% de la largeur de la bande de colle, plus préférentiellement encore supérieure à 80% de ladite largeur. Cette mesure est intéressante pour rigidifier la feuillure 8 en particulier lorsque celle-ci est soumise à des efforts d'arrachement orientés dans une direction transversale à la feuillure. En particulier, on peut observer qu'au moins un des éléments, en l'occurrence chacun des éléments, forme une zone 16 adjacente aux bords juxtaposés 6 et 6' et qui comprend une portion courbée 18. Une telle zone dans un mode alternatif de réalisation de l'invention peut comprendre une portion avec un pli. Ces portions sont parfois couramment appelées des carres. On comprend alors mieux comment la feuillure peut être soumise à l'arrachement par traction ou torsion sur chaque élément via les portions des éléments comprenant les carres et comment un désaxage de la bande de colle 12 vers la carre peut rigidifier l'assemblage. On peut voir indiquées sur le dessin des flèches représentant les directions que peuvent prendre de tels efforts d'arrachement de la feuillure. Les éléments en tôle métallique représentés en points interrompus illustrent leur état sous contraintes dû à ces efforts. Dans un mode particulier de l'invention ici représenté, le deuxième axe (celui de la bande de colle) est décalé du premier axe d'une distance égale à 50% de la largeur « d » de la bande de colle. Le deuxième axe (celui de la bande de colle) peut être décalé du premier axe d'une distance comprise entre 20% et 80% de la largeur de la bande de colle, préférentiellement entre 50% et 70% de ladite largeur. La bande de colle peut comprendre de la colle à base d'époxy ou à base de polyuréthane élastomère. Les éléments peuvent être des emboutis de carrosserie de véhicule automobile en fer ou bien en aluminium. Il est à noter que lorsqu'on parle de décalage d'axe, on entend un décalage qui n'est pas insignifiant comme pourrait l'être un décalage de quelques dixièmes de millimètres, le deuxième axe est décalé de plus de 2mm par rapport au premier axe. Le deuxième axe peut être décalé de plus de 4mm par rapport au premier axe.

La figure 2 illustre un assemblage conforme à l'invention dans un mode particulier de réalisation. La figure 3 illustre un assemblage conforme à l'invention dans un mode alternatif de réalisation. Les numéros de référence de la figure 1 sont utilisés aux figures 2 et 3 pour les éléments identiques ou correspondants, ces numéros étant toutefois majorés de 100 pour le mode particulier de réalisation illustré à la figure 2, et de 200 pour le mode alternatif de réalisation illustré à la figure 3.

Le mode particulier de réalisation de l'invention va être décrit en référence à la figure 2.

La figure 2 est une vue de dessus en transparence d'un assemblage 102 d'éléments de tôle métallique 104 et 104' conforme à l'invention et dans un mode particulier de réalisation de l'invention. On peut voir les bords juxtaposés 106 et 106' des éléments ainsi que la feuillure de jonction 108 des éléments avec l'extrémité libre 114 de la feuillure à droite de l'image. On peut voir les points de soudage 110 s'étendant suivant le premier axe « L₁ » et la bande de colle 112 qui s'étend suivant le deuxième axe « L₂ ». Dans ce mode de réalisation de l'invention, la bande de colle 112 est discontinue et les points de soudage 110 sont réalisés au niveau des tronçons 120 dépourvus de colle. Les points de soudage 110 sont en l'occurrence réalisés selon l'axe médian « M » de la feuillure 108. La bande de colle discontinue 112 est en l'occurrence entièrement située dans la moitié « m₂ » de la feuillure opposée à l'extrémité libre 114 de la feuillure 108. Cette mesure est favorable à la rigidité des éléments, en particulier au niveau de la zone 116 comprenant la carre 118 comme introduit en relation avec la figure 1, mais elle ne limite cependant pas l'invention. La largeur « d » de la bande de colle est, par ailleurs, en l'occurrence inférieure à la moitié de la largeur « D » de la feuillure. Cette mesure ne limite pas non plus l'invention. Les points de soudage ici représentés sont d'un diamètre compris entre 20% et 30% de la largeur « D » de la feuillure. Cette mesure est favorable à la rigidité de l'assemblage, elle ne limite cependant pas l'invention. Dans un mode alternatif de réalisation, les points de soudage peuvent être réalisés au niveau des tronçons pourvus de colle 121.

La figure 3 est une vue de dessus en transparence d'un assemblage 202 d'éléments en tôle métallique 204 et 204' conforme à l'invention et dans un mode alternatif de réalisation de l'invention. Tout comme pour la figure 2 présentant le mode particulier de réalisation de l'invention, on peut voir les bords juxtaposés 206 et 206' des éléments 204 et 204' ainsi que la feuillure de jonction 208 des bords avec l'extrémité libre 214 de la feuillure à droite de l'image. Dans le mode de réalisation alternatif ici présenté, la bande de colle 212 est continue. On peut voir les points de soudage 210 s'étendant suivant le premier axe « L₁ » ainsi que la bande de colle qui s'étend suivant le deuxième axe « L₂ ». On peut observer que le positionnement des premier et deuxième axes ainsi que la taille des points de soudage et la largeur de la bande de colle sont identiques à ceux en référence au premier mode de réalisation en relation avec la figure 2. Cela ne limite cependant pas l'invention.

Les figures 4 à 6 illustrent le procédé de réalisation d'un assemblage de deux éléments en tôle métallique conforme à l'invention. La figure 4 illustre une première étape du procédé. La figure 5 illustre une deuxième étape du procédé. La figure 6 illustre une troisième étape du procédé.

La première étape du procédé de l'invention va être décrite en référence à la figure 4.

À cette première étape du procédé, un cordon de colle 12 est déposé sur le bord 6' d'un 4' des deux éléments en tôle métallique suivant le deuxième axe. Il est à noter que la bande de colle de l'assemblage est ici déposé sous la forme d'un cordon de colle. Alternativement, la colle déposée sur le bord de l'élément peut se présenter directement sous la forme d'un matériau sous forme de bande.

La deuxième étape du procédé de l'invention va être décrite en référence à la figure 5.

A cette deuxième étape du procédé, un deuxième élément 4 est assemblé sur le premier élément 4' pour réaliser l'assemblage 2 des deux éléments 4 et 4' au niveau des bords juxtaposés 6 et 6' et ainsi former la feuillure de jonction. Une fois la bande de colle 12 en contact avec le bord 6 de l'élément 4, l'assemblage 2 peut se rigidifier avec le temps et le durcissement de la bande de colle. Les éléments de l'assemblage peuvent être maintenus en position pendant la période de durcissement de la bande de colle. Dans le cas de la dépose de la colle sous forme de cordon à la première étape, le cordon à cette étape est écrasé et prend la forme d'une bande de colle.

La troisième étape du procédé de l'invention va être décrite en référence à la figure 6.

A cette troisième étape du procédé de l'invention, des points de soudage 10 par résistance électrique sont réalisés entre les bords 6 et 6' des éléments 4 et 4' de l'assemblage. On peut voir représentées sur l'image des têtes de soudage selon le premier axe en vue de réaliser un des points de soudage de l'assemblage. Une fois le soudage réalisé, un maintien de l'assemblage n'est pas nécessaire.

## Revendications

1. Assemblage (2; 102; 202) d'au moins deux éléments en tôle métallique (4, 4' ; 104, 104' ; 204, 204') comprenant, chacun, un bord (6, 6' ; 106, 106' ; 206, 206') plan, lesdits bords p étant superposés pour former une feuillure plane de jonction (8 ; 108 ; 208) desdits éléments, ladite feuillure comprenant une extrémité libre (14 ; 114 ; 214), et lesdits bords étant assemblés par :
- des points de soudage (10 ; 110 ; 210) répartis le long de la feuillure suivant un premier axe (L₁) ; et
- au moins une bande de colle (12 ; 112 ; 212) dans la feuillure s'étendant le long de ladite feuillure suivant un deuxième axe (L₂) ;
le deuxième axe (L₂) est décalé par rapport au premier axe (L₁), dans une direction opposée à l'extrémité libre de la feuillure, **caractérisé en ce que** le premier axe (L1) est situé dans l'axe médian (M) de la feuillure (8 ; 108 ; 208) ou à distance dudit axe de moins de 30% de la largeur (D) de la feuillure, le deuxième axe (L2) étant décalé du premier axe (L1) d'une distance comprise entre 20% et 80% de la largeur (d) de la bande de colle (12 ; 112 ; 212).

2. Assemblage (2 ; 102 ; 202) selon la revendication 1, **caractérisé en ce que** le premier axe (L₁) est situé préférentiellement à distance de l'axe médian de moins de 15% de la largeur (D) de la feuillure, plus préférentiellement encore de moins de 5% de ladite largeur.

3. Assemblage (2 ; 102 ; 202) selon les revendications 1 à 2, **caractérisé en ce que** le deuxième axe (L₂) est décalé du premier axe (L₁) d'une distance préférentiellement comprise entre 50% et 70% de la largeur (d) de la bande de colle (12 ; 112 ; 212).

4. Assemblage (2 ; 102 ; 202) selon la revendication 1, **caractérisé en ce que** le deuxième axe (L₂) est décalé de plus de 2mm, préférentiellement de plus de 4mm par rapport au premier axe (L1)

5. Assemblage (2 ; 102 ; 202) selon l'une des revendications 1 à 4, **caractérisé en ce que** la bande de colle (12 ; 112 ; 212) est continue ou discontinue.

6. Assemblage (102) selon l'une des revendications 1 à 5, **caractérisé en ce que** la bande de colle est discontinue et les points de soudage (110) sont réalisés au niveau des tronçons pourvus de colle (121) ou au niveau des tronçons dépourvus de colle (120).

7. Assemblage (2 ; 102 ; 202) selon la revendication 1 à 6, **caractérisée en ce que** la feuillure (8 ; 108 ; 208) comprend une première moitié (m1) partant de l'extrémité libre (14 ; 114 ; 214), la bande de colle (12 ; 112 ; 212) comprenant une portion (15) s'étendant sur la deuxième moitié (m2) de ladite feuillure, ladite portion étant de largeur (P) supérieure à 50% de la largeur (d) de ladite bande, préférentiellement supérieure à 65% de ladite largeur, plus préférentiellement encore supérieure à 80% de ladite largeur.

8. Assemblage (2 ; 102 ; 202) selon l'une des revendications 1 à 7, caractérisé les points de soudage sont des points de soudage tels que obtenus par résistance électrique, par soudage laser.

9. Assemblage (2 ; 102 ; 202) selon l'une des revendications 1 à 8, **caractérisé en ce qu'**un ou plusieurs des éléments (4, 4' ; 104, 104' ; 204,204') forment au moins une zone (18 ; 118) qui est adjacente au bord (6, 6' ; 106, 106') et qui comprend un pli ou au moins une portion courbée (16, 116).

10. Procédé de réalisation d'un assemblage (2; 102; 202) selon l'une des revendications 1 à 9, **caractérisé par** les étapes suivantes :
- dépose d'un cordon de colle (12; 112; 212) suivant le deuxième axe (L₂) sur le bord plan (6' ; 106' ; 206') d'un (4' ; 104' ; 204') des éléments ;
- assemblage d'un autre (4; 104; 204) des éléments sur l'élément (4' ; 104' ; 204') ;
- réalisation des points de soudage (10 ; 110 ; 210) suivant le premier axe (L₁) ;

## Patentansprüche

1. Zusammenbau (2; 102; 202) mindestens zwei Metallblechelementen (4, 4', 104, 104' 204, 204') mit jeweils einem Rand (6, 6'; 106, 106' 206, 206'), wobei die Ränder übereinander angeordnet sind, um eine Verbindungsfalte (8; 108 208. der Teile, wobei der Falz ein freies Ende (14) aufweist; 114 214. und die Kanten
- Schweißpunkte (10, 110, 210). entlang der Falte entlang einer ersten Achse (L1) verteilt; und
- mindestens ein Klebestreifen (12; 112 212. in dem Falz, der sich entlang des Falzes entlang einer zweiten Achse (L2) erstreckt;
**dadurch gekennzeichnet, dass**
die zweite Achse (L2) ist gegenüber der ersten Achse (L1) in einer dem freien Ende der Falte entgegengesetzten Richtung versetzt.

2. Zusammenbau (2; 102; 202) nach Anspruch 1, **dadurch gekennzeichnet, dass** die zweite Achse (L2) um mehr als 2 mm, vorzugsweise um mehr als 4 mm gegenüber der ersten Achse (L1) versetzt ist.

3. Zusammenbau (2; 102; 202) nach einem der Ansprüche 1 und 2, **dadurch gekennzeichnet, dass** das Klebestreifen (12; 112; 212) kontinuierlich oder diskontinuierlich ist.

4. Anordnung (102) nach einem der Ansprüche 1 bis 3, **dadurch gekennzeichnet, dass** das Klebestreifen diskontinuierlich ist und die Schweißpunkte (110) im Bereich der mit Klebstoff (121) versehenen Abschnitte oder der nicht mit Klebstoff (120) versehenen Abschnitte ausgebildet sind.

5. Zusammenbau (2; 102; 202) nach einem der Ansprüche 1 bis 4, **dadurch gekennzeichnet, dass** die erste Achse (L1) in der Mittelachse (M) der Falze (8; 108 208) oder in einem Abstand von weniger als 30 % der Falzbreite (D), vorzugsweise weniger als 15 % der Falzbreite, noch bevorzugter weniger als 5 % der Falzbreite.

6. Zusammenbau (2; 102; 202) nach Anspruch 1 bis 5, **dadurch gekennzeichnet, dass** der Falz (8; 108 208) eine erste Hälfte (m1) vom freien Ende (14) umfasst; 114 214) Klebestreifen (12; 112; 212) einen Abschnitt (15) umfasst, der sich über die zweite Hälfte (m2) des Blattes erstreckt, wobei der Abschnitt eine Breite (P) von mehr als 50% der Breite (d) des Streifens, vorzugsweise mehr als 65% der Breite, noch bevorzugter mehr als 80% der Breite aufweist.

7. Zusammenbau (2; 102; 202) nach den Ansprüchen 1 bis 6, **dadurch gekennzeichnet, dass** die zweite Achse (L2) um einen Abstand zwischen 20 % und 80 % der Breite (d) des Klebestreifens (12) von der ersten Achse (L1) versetzt ist; (112; 212), vorzugsweise zwischen 50 % und 70 % dieser Breite.

8. Zusammenbau (2; 102; 202) nach einem der Ansprüche 1 bis 7, **dadurch gekennzeichnet, dass** die Schweißpunkte sind, die durch elektrischen Widerstand, durch Laserschweißen erhalten werden.

9. Zusammenbau (2; 102; 202) nach einem der Ansprüche 1 bis 8, **dadurch gekennzeichnet, dass** eines oder mehrere der Elemente (4; 4'; 104; 104'; 204; 204') mindestens einen Bereich (18; 118) an den Rand (6; 6'; 106; 106'), die eine Falte oder mindestens einen gekrümmten Abschnitt (16; 116) aufweist.

10. Verfahren zur Herstellung einer Verbindung (2; 102; 202) nach einem der Ansprüche 1 bis 9, **gekennzeichnet durch** die folgenden Schritte:
- Ablegen eines Klebestreifens (12; 112; 212) entlang der zweiten Achse (L2) am Rand (6'); 106' 206') einem (4'; 104'; 204') der Bestandteile
- einer anderen (4; 104; 204) Elemente am Element (4; 104'; 204')
- der Schweißpunkte (10; 110; 210. in der ersten Achse (L1)

## Claims

1. Assembly (2; 102 ; 202) of at least two metal sheet elements (4, 4'; 104, 104' ; 204, 204'), each comprising one edge (6, 6'; 106, 106'; 206, 206'), the said edges being superposed to form a junction sheet (8; 108 ; 208) of the said elements, said felt comprising a free end (14; 114; 214), and said edges are assembled by:
- welding points (10; 110; 210) distributed along the foliage following a first axis (L1); and
- at least one adhesive band (12; 112; 212) in the foliage extending along said foliage following a second axis (L2);
**characterized in that**
the second axis (L2) is offset against the first axis (L1) in a direction opposite the free end of the foliage.

2. Assembly (2; 102; 202) according to claim 1, **characterized in that** the second axis (L2) is more than 2mm, preferably more than 4mm from the first axis (L1).

3. Assembly (2; 102; 202) according to one of claims 1 and 2, **characterized in that** the glue band (12; 112; 212) is continuous or discontinuous.

4. Assembly (102) according to one of claims 1 to 3, **characterized in that** the glue band is discontinuous and the welding points (110) are made at the glue-filled sections (121) or at the glue-free sections (120).

5. Assembly (2; 102; 202) according to one of claims 1 to 4, **characterized in that** the first axis (L1) is located in the center axis (M) of the foliage (8; 108; 208) or at a distance from said axis less than 30% of the width (D) of the sheet, preferably less than 15% of said width, more preferably still less than 5% of said width.

6. Assembly (2; 102; 202) according to claim 1 to 5, **characterized in that** the foliage (8; 108; 208) includes a first half (m1) starting from the free end (14; 114; 214), the adhesive band (12; 112; 212) comprising a portion (15) extending over the second half (m2) of said sheet, said portion being of width (P) greater than 50% of the width (d) of said band, preferably greater than 65% of said width, more preferably still greater than 80% of said width.

7. Assembly (2; 102 ; 202) according to claims 1 to 6, **characterized in that** the second axis (L2) is offset from the first axis (L1) by a distance between 20% and 80% of the width (d) of the glue band (12; 112; 212), preferably between 50% and 70% of said width.

8. Assembly (2; 102; 202) according to one of claims 1 to 7, characterized the welding points are welding points as obtained by electrical resistance, by laser welding.

9. Assembly (2; 102; 202) according to one of claims 1 to 8, **characterized in that** one or more of the elements (4, 4'; 104, 104'; 204,204') comprise at least one area (18 ; 118) which is adjacent to the edge (6, 6'; 106, 106') and which includes a bend or at least one curved portion (16, 116).

10. Process for making an assembly (2; 102; 202) according to one of claims 1 to 9, **characterized by** the following steps:
- removal of a glue cord (12; 112 ; 212) following the second axis (L2) on the edge (6'; 106' ; 206') of one (4'; 104' ; 204') of the elements;
- assembly of another (4 ; 104 ; 204) elements on the element (4'; 104' ; 204');
- construction of welding points (10; 110 ; 210) following the first axis (L1).
